# EUROPEAN PATENT SPECIFICATION

(11) **EP 2 827 237 B1**
(45) Date of publication and mention of the grant of the patent: **29.08.2018**
(21) Application number: 14173424.4
(22) Date of filing: 23.06.2014
(51) Int. Cl.: G06F 3/0488, G06F 3/0484, G06F 3/0354

(54) **Zoom control of screen image in electronic device**
Zoomsteuerung eines Bildschirmbildes in elektronischer Vorrichtung
Commande de zoom d'image d'écran dans un dispositif électronique

(30) Priority: 15.07.2013 KR 20130082800
(43) Date of publication of application: 21.01.2015
(73) Proprietor: Samsung Electronics Co., Ltd., Gyeonggi-do 443-742 (KR)
(72) Inventor: Lee, Sun-Kee, 443-742 Gyeonggi-do (KR); Kim, Geon-Soo, 443-742 Gyeonggi-do (KR); Kim, Han-Jib, 443-742 Gyeonggi-do (KR); Jung, Jee-Hye, 443-742 Gyeonggi-do (KR)
(74) Representative: HGF Limited

(56) References cited:
- US-A1- 2003 044 069
- US-A1- 2010 315 438
- US-B1- 8 448 083

## Description

### BACKGROUND

### Technical Field

The present disclosure relates generally to an electronic device, and more particularly, to controlling zooming in and out of a screen image in an electronic device that operates with an electronic pen.

### Description of the Related Art

Recently, various electronic devices such as smart phones have become widespread. Many of these electronic devices are equipped with an electronic pen (e.g., a stylus pen) as an input means, for convenient use thereof. For capacitive type touchscreen devices, the electronic pen provides a capacitance at its tip, to thereby operate as a substitute for a human finger on the touchscreen.

When the electronic pen is typically used, the user's fingers are naturally restricted from touching the surface of the touchscreen, whereby unintended finger-touch inputs are prevented.

When images such as photos, documents or pages of electronic books are displayed on the electronic device, the user may desire to zoom in or out on the image to enlarge or reduce the displayed image, respectively (hereafter referred to performing a "screen zoom", "zoom in/out the screen" or just "zoom in/out" or the like). This screen zoom function commonly uses a technique such as pinch zoom (also known as 'pinch to zoom'). Therefore, if the user desires to zoom in/out while performing another task using the electronic pen, he or she needs to first separate the electronic pen from the touchscreen by a sufficient distance to prevent its recognition by the electronic device, and thereafter perform the finger-based pinch zoom. These operations may be found burdensome and annoying to the user.

The above information is presented as background information only to assist with an understanding of the present disclosure. No determination has been made, and no assertion is made, as to whether any of the above might be applicable as prior art with regard to the present disclosure.

US2010/315438 A1 discloses a user interface method for providing continuous zoom functionality where a user may initiate a zoom-in or zoom-out function by tracing an ellipsoidal shape using a user interface device.

US8448083 B1 discloses a multimedia editing application which may be controlled using a plurality of gesture controls, where gestures may be used to control transport, playback timing, editing and view management.

US2003/044069 A1 disclose a handwriting recognition system for a tablet computer in which a user may input handwriting using a wireless pen, where the tablet may receive messages from the wireless pen and decide the location of the wireless pen and the current mode of the handwriting recognition system.

### SUMMARY

An aspect of the present disclosure is to provide a way to easily perform screen zooming. The invention is set out in the appended set of claims. Other aspects, advantages, and salient features of the disclosure will become apparent to those skilled in the art from the following detailed description, which, taken in conjunction with the annexed drawings, discloses exemplary embodiments of the disclosure.

### BRIEF DESCRIPTION OF THE DRAWINGS

The above and other aspects, features and advantages of certain exemplary embodiments of the present disclosure will be more apparent from the following description taken in conjunction with the accompanying drawings, in which:
FIG. 1 is a flowchart illustrating a screen zooming method according to one of various exemplary embodiments of the present disclosure;
FIG. 2 schematically illustrates an example electronic pen, which is an example input device applicable to one of various exemplary embodiments of the present disclosure;
FIG. 3 illustrates a process of determining a moving direction of an electronic pen according to one of various exemplary embodiments of the present disclosure;
FIGs. 4A to 4C illustrate a process of determining a zoom ratio of the screen according to one of various exemplary embodiments of the present disclosure;
FIGs. 5A to 5E illustrate a process of determining a reference point for screen zooming according to one of various exemplary embodiments of the present disclosure;
FIGs. 6A and 6B illustrate a process of performing screen restoration according to one of various exemplary embodiments of the present disclosure;
FIGs. 7A to 7C illustrate a process of indicating screen zooming according to one of various exemplary embodiments of the present disclosure;
FIG. 8 is a block diagram illustrating a screen zooming apparatus to which various exemplary embodiments of the present disclosure are applicable; and
FIG. 9 illustrates a screen zooming apparatus according to one of various exemplary embodiments of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of exemplary embodiments of the disclosure as defined by the claims. It includes various specific details to assist in that understanding but these are to be regarded as merely exemplary. Accordingly, those of ordinary skilled in the art will recognize that various changes and modifications of the embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of exemplary embodiments of the present disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example,
reference to "a component surface" includes reference to one or more of such surfaces.

Herein, depending on context of use, the term "screen" may refer to an image displayed on a display unit, or may refer to a physical display component of a display unit. For example, "zoom a screen" refers to zooming an image displayed on a display unit, whereas dragging an electronic pen "along a screen surface" refers to a drag operation along the physical display component of a display unit.

An electronic device according to the present disclosure can be a touchscreen device such as a handheld smartphone or tablet with a capacitive type (or other type) touchscreen, and capable of recognizing a touch contact (or near touch contact) of an input device. The input device is hereafter exemplified as an electronic pen. The electronic device is also preferably configured to recognize a particular near field command signal generated by the electronic pen, where the signal generation is controlled by the user, e.g., by pressing a designated button on the pen's surface. In the embodiments described hereafter, the pen command signal is for a zoom in/out operation. When the electronic device detects the pen command signal, the device treats a subsequent touch gesture of the pen differently than if the pen command signal was not detected.

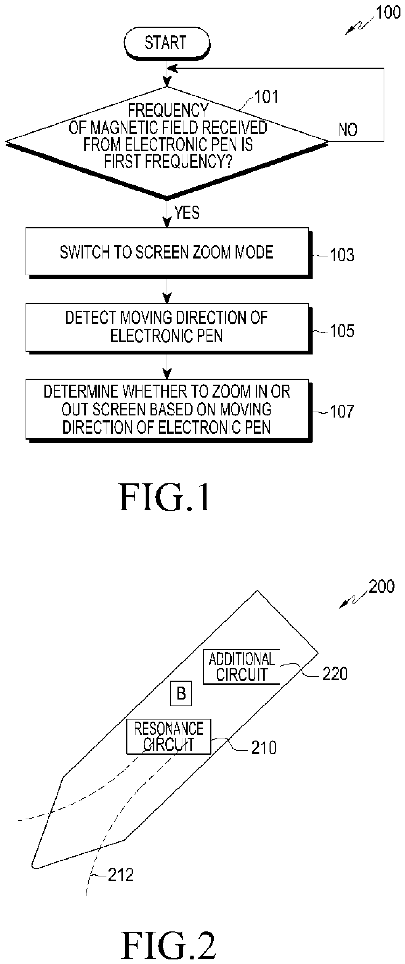

FIG. 1 is a flowchart illustrating a screen zooming method, 100, according to one of various exemplary embodiments of the present disclosure. The method is performed by an electronic device which may have a touchscreen as just mentioned (hereafter, "device" will also refer to such electronic device). (In an alternative embodiment described later, touch input is made on a touchpad without a touchscreen, and images on a separate display are zoom controlled. The following description of a method pertaining to the touchscreen-enabled device is also applicable to the arrangement with a touchpad and separate display.) The device is capable of recognizing an electronic pen's touch or near-touch on the touchscreen to discern a user's desired location of touch input. The device is further capable of detecting the pen's near field command signal as controlled by a user. FIG. 2 schematically illustrates an exemplary electronic pen, 200.

In operation 101, the electronic device determines whether the pen's command signal is generated by detecting whether a frequency of a sensed magnetic field is that of a preset first frequency. The frequency of the magnetic field received from the electronic pen 200 may be the first frequency, for example, when a button B mounted on the electronic pen 200 (refer to FIG. 2) is pressed.

As shown in FIG. 2, example electronic pen 200 may include a resonance circuit 210. Resonance circuit 210 may include a capacitor and a coil (not shown) which are driven to form a magnetic field 212 having a resonant frequency which is a function of the capacitance and inductance of the capacitor and coil, respectively. The resonant frequency may be generated when the user depresses the button B, which may close a circuit path for providing power to the resonance circuit 210 and generate the pen command signal. Alternatively, in some pen 200 implementations, the button B manipulation changes a frequency of resonance of resonance circuit 210 from another frequency to the first frequency. This frequency change can result, for example, from changing a capacitance by manipulating a variable capacitor, or by short-circuiting any one of a plurality of capacitors when the button B is depressed.

In accordance with an exemplary embodiment, the electronic pen may further include an additional circuit 220. The additional circuit 220 may include, for example, a chip for processing various processes, a battery (which may supply power to resonant circuit 210), a memory, or the like.

With continued reference to FIG. 1, when the first frequency is detected at 101, in operation 103, the electronic device switches to a screen zoom mode. The term 'screen zoom mode' as used herein may refer to a mode in which the electronic device performs screen zooming as a function of the movement of the electronic pen while the button B on the electronic pen 200 is pressed (or after it is pressed and released), i.e., while the frequency of the magnetic field received from the electronic pen is equal to the first frequency.

Next, in operation 105, the electronic device detects a moving direction of the electronic pen. In operation 107, the electronic device determines whether to perform a zoom in, or a zoom out (of the screen image) based on the moving direction of the electronic pen, and performs screen zooming according to the determination.

It should be noted, any time after a switch to the screen zoom mode at operation 103, the screen zoom mode can be exited in response to any of a number of predetermined conditions, of which some examples will be described later.

Thus far, a description has been made of a screen zooming method using an electronic pen according to one of various exemplary embodiments of the present disclosure. Various exemplary embodiments of the present disclosure will now be described in more detail with reference to screen examples.

As described above, the electronic device may determine whether to zoom in or out the screen taking into account the direction in which the electronic pen has moved. For example, if the electronic pen moves in a first direction (for example, the upper direction or the lower direction) in relation to the touchscreen, the electronic device may determine to zoom in the screen. On the other hand, if the electronic pen moves in a second direction (for example, the left direction or the right direction), the electronic device may determine to zoom out the screen. (The above-noted upper/lower and left/right directions may be in a lengthwise and widthwise direction, respectively, of an electronic device when the device is held in a "portrait" orientation with a lengthwise dimension of the electronic device considered to be vertical. When held in a "landscape" orientation where a lengthwise direction of a rectangular device is horizontal, upper/lower may refer to a widthwise direction of the electronic device.)

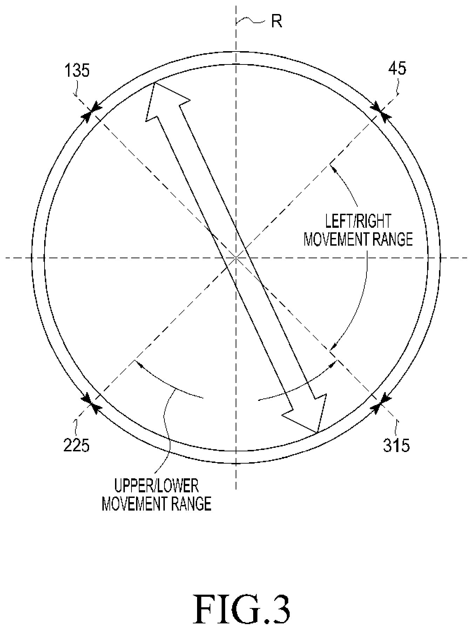

In an embodiment, the moving direction of the electronic pen need not be substantially linear to represent a zoom command. Therefore, an embodiment can be designed so that if the electronic pen moves within a first preset angle range, the electronic device determines that the movement is in the first direction; and if the pen moves within a second preset angle range, the device determines that the pen moves in the second direction. For example, as illustrated in FIG. 3, the electronic device may define in advance a set upper-lower movement angle range of 45∼135° (equivalent to 225∼315°) and a set left-right movement range of 135∼225° (equivalently, 315∼45°). For example, a reference axis R corresponds to a vertical direction relative to the device orientation. The axis R may correspond to a longitudinal (lengthwise) direction in a portrait orientation of the electronic device, or a widthwise direction in a landscape orientation. If the electronic pen moves within an angular range bound by the 45° (225°) axis and the 135° (315°) axis, the electronic device may determine that the electronic pen moves in the upper / lower direction. In this case, the electronic device may determine to zoom in the screen.

Similarly, if the electronic pen moves within an angular range bound by the 135° axis and the 225° axis, the electronic device may determine that the electronic pen moves in the left / right direction. In this case, the electronic device may determine to zoom out the screen.

When determining whether to zoom in or out, the electronic device also determines by how much the screen is to be zoomed in or out, i.e., it determines a zoom ratio of the screen. The zoom ratio may be determined based on the distance of the moving trajectory of the electronic pen (e.g., a drag movement of a tip of the pen 200 along a surface of the screen of the electronic device 10).

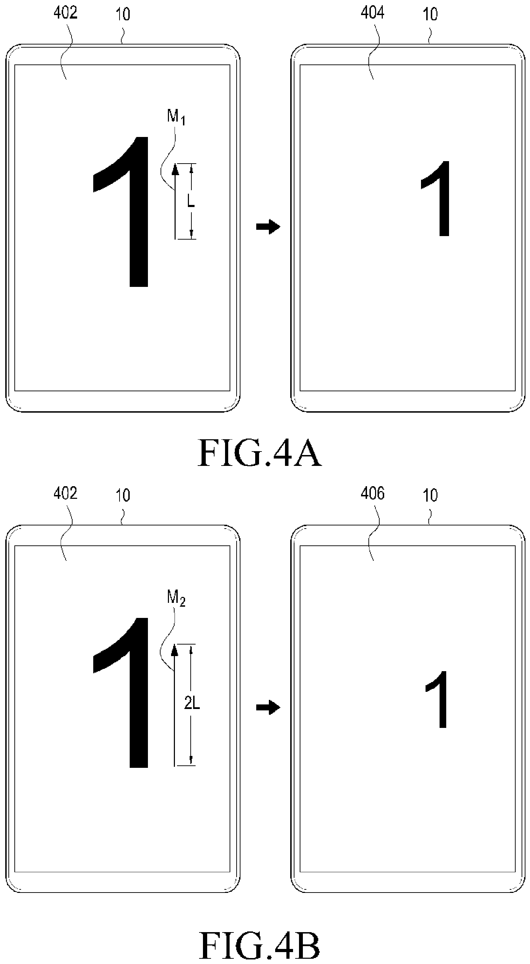

For example, FIG. 4A illustrates an electronic device 10 initially displays a screen 402 containing an image "1" prior to receiving a command from an electronic pen 200. A trajectory M₁ along which the electronic pen 200 moves following a press of the button B is assumed to be a distance L in length. In this example, up-down movement of the pen is predetermined to cause a zoom-out rather than the zoom-in example discussed above. Device 10 may determine the zoom-out ratio of the screen corresponding to a pen movement distance L as 100%. This means that the size of the image prior to the zoom-out is 2x (100% higher) that of the size after the zoom-out, resulting in the exemplary zoomed-out screen 404. As illustrated in FIG. 4B, if the trajectory M₂ along which the electronic pen has moved is 2L in length, device 10 may determine the zoom-out ratio of the screen as 200%. As a result, the image of screen 406 is reduced to a size 1/3 that of screen 402.

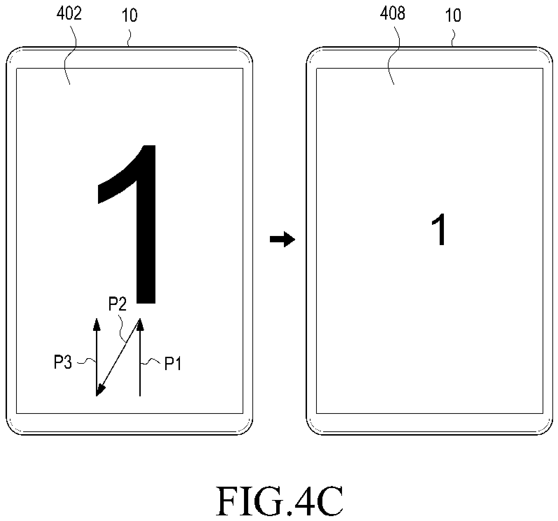

If the electronic pen alternately moves left and right, or alternately moves up and down, the electronic device may determine a ratio of a screen zoom (in or out) by summing up the distances of all the trajectories of the electronic pen. For example, as illustrated in FIG. 4C, the electronic pen 200 moves in a sequence of paths P1, P2 and P3, which are all within the angular range of an up/down movement. Thus the pen moves in a first direction three times, whereby device 10 may determine the zoom-out ratio of the screen 402 by summing up all the trajectories along which the electronic pen has moved. As illustrated, if the sum of the trajectories along which the electronic pen has moved is 3L, the electronic device may determine the zoom-out ratio of the screen as 300%, resulting in screen 408.

In performing screen zooming, the electronic device may determine whether to zoom in or out the screen on the basis of a certain point (hereinafter, referred to as a 'reference point'). This reference point may be determined based on the location of the electronic pen.

In an exemplary embodiment, the electronic device may determine, as a reference point (start position), the point where the electronic pen is located at the time the button on the electronic pen is pressed (for example, the time the frequency of the magnetic field received from the electronic pen is changed). Thereafter, when performing screen zooming depending on the moving directions and the trajectories of the electronic pen, the electronic device may perform screen zooming on the basis of the reference point. In other words, for the same pen directional movement and distance, the resulting zoomed-in or zoomed-out screen resulting from a first pen start position will be different than that resulting from a second start position.

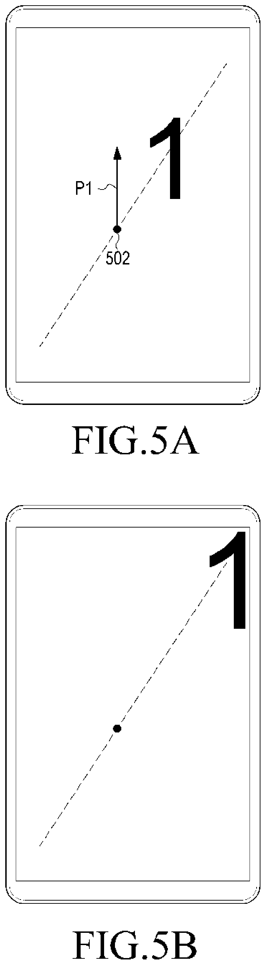

For example, as illustrated in FIG. 5A, it will be assumed that the coordinates of the electronic pen are at point 502 at the time the button B on electronic pen 200 is pressed. In this case, if pen 200 has moved in the upper direction in a path P₁, device 10 may determine to zoom in the screen, and perform screen zooming-in on the basis of the coordinates at 502. The zoomed-in screen is illustrated in FIG. 5B, where it is seen that the original image is enlarged and a portion of the image just right of center, and just above center, is moved to the upper right corner of the screen. In this embodiment, if the start point differs from point 502 and the same upward movement P₁ is made from the different start point, the resulting zoomed image would differ in some respect (e.g., different lateral movement and/or different zoom ratio).

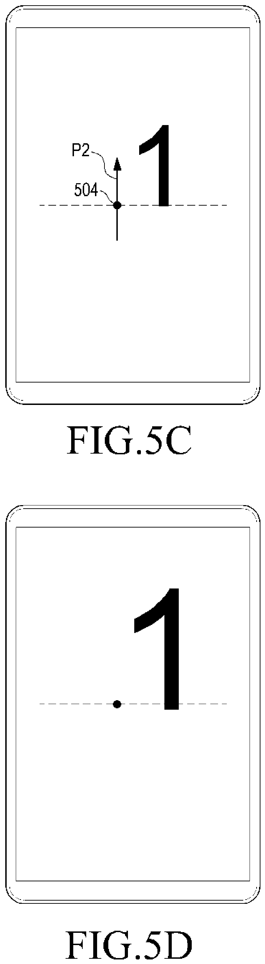

In accordance with an exemplary alternative embodiment, the screen may be zoomed in or out on the basis of the center point, rather than the start point, of the trajectory along which the electronic pen has moved. For example, as illustrated in FIG. 5C, assume that the coordinates of the center point of the trajectory P₂, along which the electronic pen has moved, are at a point 504. In this case, if the electronic pen has moved in the upper direction, the electronic device may determine to zoom in the screen, and perform screen zooming-in on the basis of the coordinates at the point 504. The exemplary zoomed-in screen is illustrated in FIG. 5D. In this embodiment, the resulting image may look different in some respect if the same trajectory P₂ is made at a different location on the screen, since that trajectory would have a different center point.

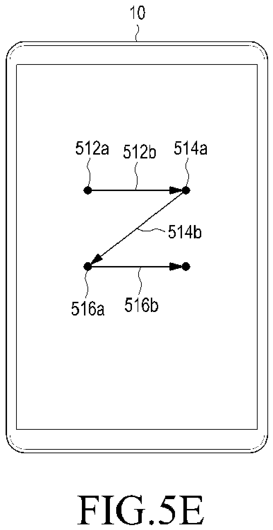

In accordance with an exemplary embodiment, the screen may be zoomed in or out on the basis of the reference point, which is the point where the electronic pen is located at the time the trajectory of the electronic pen changes direction. For example, assume that the directions of the trajectory of the electronic pen change as illustrated in FIG. 5E. In this case, device 10 may perform screen zooming-in/out on the basis of a point 514a in a section 514b. The electronic device may perform screen zooming-in/out on the basis of a point 516a in a section 516b. In a section 512b, the electronic device may perform screen zooming-in/out on the basis of a point 512a at which the trajectory of the electronic pen starts. For instance, if the entire zig-zag pattern seen in FIG. 5E were to be made at a position lower, higher, to the left or to the right of that shown, the direction change points 514a and 516a would differ and consequently, different zoom parameters (e.g., zoom ratio) may be implemented.

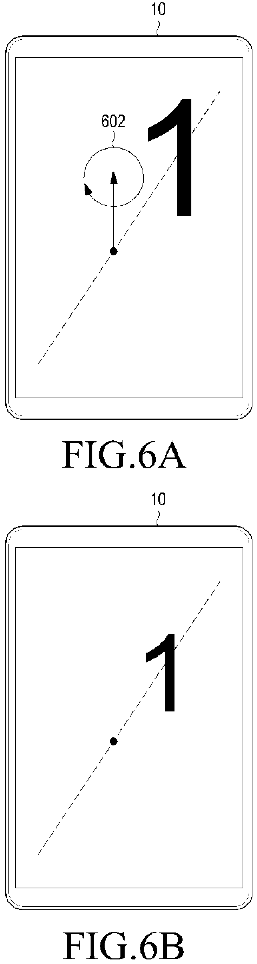

Upon detecting a preset gesture while performing screen zooming-in/out (or after a zoom in/out has been implemented), the electronic device may restore the zoomed-in/out screen to its original screen. For example, as illustrated in FIG. 6A, if it is determined that the trajectory of the electronic pen forms a preset gesture 602 after the screen is zoomed in, the electronic device may restore the zoomed-in screen to its original screen as illustrated in FIG. 6B.

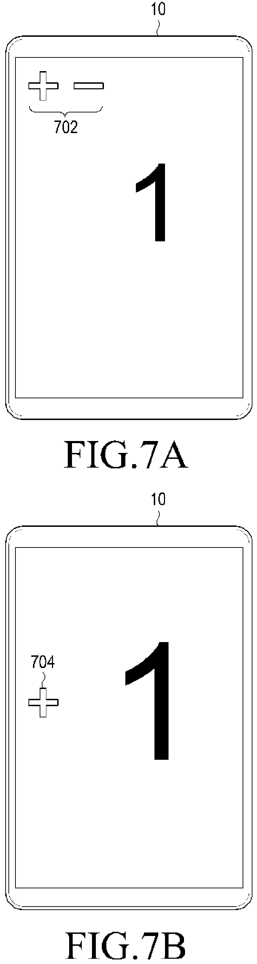

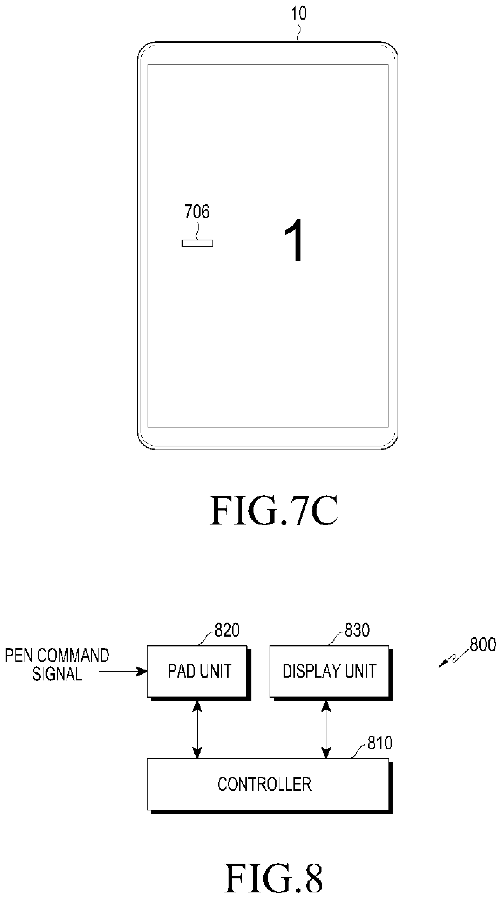

When device 10 switches to the screen zoom mode, the user may be informed of the mode switch through display information. For example, as illustrated in FIG. 7A, the electronic device may display in a set display area an image 702 that indicates the switching to the screen zoom mode. Image 702 contains both a '+' and a '-', indicating that either a zoom-in or a zoom-out is possible via a suitable pen movement. Alternatively, as illustrated in FIG. 7B, the electronic device may display in a set display area an image 704 indicating that the screen is currently being zoomed in, or as illustrated in FIG. 7C, the electronic device may display in a set display area an image 706 indicating that the screen is currently being zoomed out.

The electronic device may exit the screen zoom mode, if a frequency of a magnetic field received from the electronic pen is changed to a frequency different from the first frequency. For example, the electronic device may exit the screen zoom mode, if another button mounted on the electronic pen is pressed, or if the button B, which was pressed when the electronic device was switched to the screen zoom mode, is released or unpressed. In accordance with an exemplary embodiment, the electronic device may exit the screen zoom mode, if it is determined that strength of a magnetic field received from the electronic pen is lower than a preset threshold for a predetermined period of time. Such reduction in magnetic field below the threshold may correspond to a condition of the electronic pen being separated from the electronic device by a minimum of a preestimated distance for a certain period of time.

So far, a screen zooming method according to one of various exemplary embodiments of the present disclosure has been described with reference to FIGs. 1 to 7C. A screen zooming apparatus, to which various exemplary embodiments of the present disclosure are applicable, will be described below with reference to related drawings.

FIG. 8 is a block diagram illustrating a screen zooming apparatus, 800, which may be part of an electronic device to which various exemplary embodiments of the present disclosure are applicable. For instance, apparatus 800 may be part of the electronic device 10 shown in FIGS. 3 through 7. Screen zooming apparatus 800 may include a controller 810, a pad unit 820 and a display unit 830. If the electronic device is a touchscreen device, pad unit 820 can be a touch panel integrated with display unit 830.

The controller 810 may analyze information received from the pad unit 820 to determine a touch contact point of the electronic pen. Further, pad unit 820 includes a receiving unit (not shown) to detect the above-described magnetic field generated by the electronic pen 200. Controller 810 determines, based on information on the magnetic field detected by and provided from the pad unit, whether a frequency of the magnetic field is changed to the above-described first frequency. If the frequency of the magnetic field is changed or initially generated to the first frequency, which is indicative of the above-described pen command signal generated by the electronic pen when its button is pressed, controller 810 switches the electronic device to the screen zoom mode. The controller 810 may analyze information received from the pad unit 820 to determine a moving direction of the electronic pen. The controller 810 may determine whether to zoom the screen in or out based on the determined moving direction of the electronic pen.

The controller 810 may determine to zoom in the screen if the electronic pen moves in the first direction. The controller 810 may determine to zoom out the screen if the electronic pen moves in the second direction.

The controller 810 may determine a zoom ratio of the screen in proportion to the moving trajectory of the electronic pen, and perform screen zooming at the determined zoom ratio.

Upon detecting a preset gesture, the controller 810 may restore the zoomed-in/out screen to its original screen.

The controller 810 may perform screen zooming on the basis of the point where the electronic pen is located at the time the controller 810 has switched to the screen zoom mode. In accordance with an exemplary embodiment, if the moving direction of the electronic pen is changed by at least a preset threshold, the controller 810 may perform screen zooming on the basis of the point where the electronic pen is located at the time the moving direction of the electronic pen is changed.

The controller 810 may exit the screen zoom mode, if the frequency of the magnetic field received from the electronic pen is changed to a frequency different from the first frequency. Alternatively or additionally, the controller 810 may analyze information received from the pad unit 820, and exit the screen zoom mode if strength of the magnetic field, which has been measured for a preset period of time, is lower than a preset threshold.

After switching to the screen zoom mode, the controller 810 may inform the user of the switching to the screen zoom mode.

The pad unit 820 may include a magnetic signal receiving unit to detect a magnetic field received from the electronic pen, and output information about the location where the magnetic field is detected, and the frequency of the magnetic field. This may be done by discerning a touch contact point with the electronic pen sensed at the time the button B is pressed. Alternatively, the electronic pen is of a type that continually outputs a magnetic field even when the button B is not pressed, and the pad unit 820 has distributed sensors that continually monitor the position of the electronic pen by sensing a distribution of the magnetic field strength, to thereby detect the location of the pen. In accordance with an exemplary embodiment, the pad unit 820 may further output information about the strength of the magnetic field received from the electronic pen.

The display unit 830 displays the screen under control of the controller 810.

Thus far, a description has been made of an example in which the electronic device detects a frequency of a magnetic field received from the electronic pen, switches to the screen zoom mode, detects a moving direction of the electronic pen, and performs screen zooming. In accordance with an exemplary embodiment, these operations may be performed based on signals received from an external source.

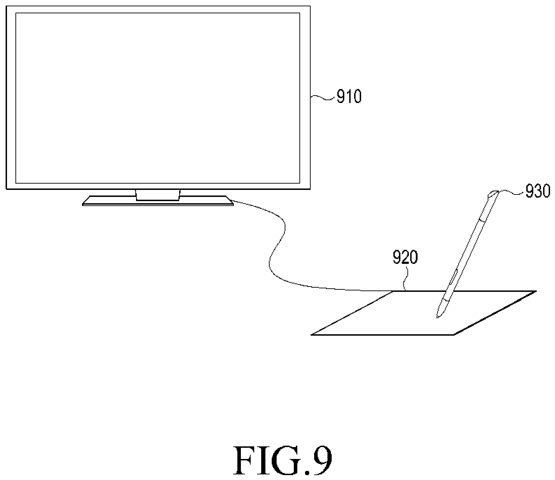

For example, FIG. 9 illustrates an arrangement with an electronic device 910 that includes the controller and display unit of FIG. 8, in which an input pad unit 920 is provided separately. Input operations take place using an electronic pen 930 on the input device 920, which is connected to electronic device 910 by wire or wirelessly. Electronic device 910 may switch to the screen zoom mode based on a signal received from the input device 920, detect a moving direction of the electronic pen 930, and perform screen zooming. The electronic device 910 may include a receiving unit (not shown) for receiving various signals from the input device 920.

The input device 920 may detect at least one of the signal received from the electronic pen 930, the pressed strength of the electronic pen 930, and the moving direction of the electronic pen 930, generate a signal corresponding to the detected information, and transmit the generated signal to the electronic device 910.

The signal received from the electronic pen 930 may be a strength or frequency signal of a magnetic field that is generated in the electronic pen 930. The input device 920 may transmit the signal received from the electronic pen 930 to the electronic device 910.

The input device 920 may detect capacitance or the pressed strength of the electronic pen 930, generate a signal indicating the pressed strength of the electronic pen 930, and transmit it to the electronic device 910.

The input device 920 may detect the moving direction of the electronic pen 930, generate a signal indicating the moving direction of the electronic pen 930, and transmit it to the electronic device 910. The moving direction of the electronic pen 930 may be determined based on the change in location of the magnetic field received from the electronic pen 930, or on the change in location where the electronic pen 930 is in contact with the input device 920.

The above-described exemplary embodiments of the present disclosure may be implemented in a variety of ways. For example, one of various exemplary embodiments of the present disclosure may be implemented by hardware, through the use of software, or a combination thereof. If implemented using software, the embodiment may be implemented through the use of software which is executed in one or more processors that use various Operating Systems (OSs) or platforms. In addition, the software may be created using any one of a plurality of appropriate programming languages, and compiled into executable machine code or intermediate code which is executed in the framework or virtual machine.

If one of various exemplary embodiments of the present disclosure is executed in one or more processors, it may be implemented with a processor-readable medium (for example, memory, floppy disk, hard disk, compact disk, optical disk, magnetic tape or the like) storing one or more programs for performing the method of implementing one of the above-described various exemplary embodiments of the present disclosure.

As is apparent from the foregoing description, various exemplary embodiments of the present disclosure allow a user to easily zoom in or out the screen using the electronic pen.

While the disclosure has been shown and described with reference to certain exemplary embodiments thereof, it will be understood by those skilled in the art that various changes in form and details may be made therein without departing from the scope of the disclosure as defined by the appended claims.

## Claims

1. A method (100) for controlling an electronic device (10) comprising a sensing device configured to detect a touch contact or a near-touch contact, the method comprising:
receiving a magnetic field signal from an input device (200) generating the magnetic field signal; determining (101) whether a magnetic field signal frequency of the received magnetic field signal is changed to a preset frequency;
switching (103) the electronic device to a screen zoom mode in response to the magnetic field signal frequency of the received magnetic field signal being changed to the preset frequency;
detecting (105) via the sensing device a moving direction of the input device during the screen zoom mode;
zooming a screen of the electronic device in or out (107) based on the detected moving direction of the input device; and
exiting the screen zoom mode in response to the magnetic field signal frequency of the received signal being changed to a frequency different from the preset frequency,
wherein the zooming the screen in or out is performed at a zoom ratio in proportion to a moving distance of the input device,
wherein during the screen zoom mode, if the moving direction of the input device is changed by at least a preset threshold, screen zooming is performed on a basis of a point where the input device is located at a time the moving direction of the input device is changed, and
wherein zooming the screen in or out comprises zooming in the screen if the input device is moved in a first direction which is a vertical direction in relation to the screen, and zooming out the screen if the input device is moved in a second direction which is a horizontal direction in relation to the screen.

2. The method (100) of claim 1, further **characterized by** restoring the zoomed-in or -out screen to an original screen upon detecting a preset gesture of the input device.

3. The method (100) of claim 1, further **characterized by** outputting information for informing a user of the switching to the screen zoom mode.

4. The method (100) of claim 1, **characterized in that** the input device is an electronic pen (200) having a button (B), the signal is transmitted by the electronic pen in response to a manipulation of the button, and the moving direction of the input device is a moving direction of a tip of the electronic pen along the surface of the screen.

5. An electronic device, comprising:
a sensing device configured to detect a touch contact or a near-touch contact;
a display unit (830) that displays an image on a screen; and
a controller (810) configured to execute the method steps of claim 1.

6. A computer readable storage medium having stored thereon computer executable instructions which when executed by a computer cause the computer to perform any of the methods of claims 1-4.

## Patentansprüche

1. Verfahren (100) zum Steuern einer elektronischen Vorrichtung (10), die eine Sensorvorrichtung aufweist, die konfiguriert ist, um einen Berührungskontakt oder Beinahe-Berührungskontakt zu erfassen, wobei das Verfahren aufweist:
Empfangen eines Magnetfeldsignals von einer Eingabevorrichtung (200), die ein Magnetsignal generiert;
Bestimmen (101), ob eine Magnetfeld-Signalfrequenz des empfangenen Magnetfeldsignals auf eine voreingestellte Frequenz geändert wird;
Umschalten (103) der elektronischen Vorrichtung auf einen Bildschirm-Zoommodus in Reaktion auf die Magnetfeld-Signalfrequenz des empfangenen Magnetfeldsignals, das auf die voreingestellte Frequenz geändert wird;
Erfassen (105), über die Sensoreinheit, einer Bewegungsrichtung der Eingabevorrichtung während des Bildschirm-Zoommodus;
Vergrößern oder Verkleinern (107) einer Bildschirmanzeige der elektronischen Vorrichtung auf Grundlage der erfassten Bewegungsrichtung der Eingabevorrichtung; und
Verlassen des Bildschirm-Zoommodus in Reaktion auf die Magnetfeld-Signalfrequenz des empfangenen Signals, das auf eine Frequenz geändert wird, die sich von der voreingestellten Frequenz unterscheidet,
wobei das Vergrößern oder Verkleinern mit einem Zoom-Verhältnis ausgeführt wird, das proportional zu einer Bewegungsstrecke der Eingabevorrichtung ist,
wobei während des Bildschirm-Zoommodus, wenn die Bewegungsrichtung der Eingabevorrichtung um mindestens einen voreingestellten Schwellenwert geändert wird, das Vergrößern/Verkleinern der Bildschirmanzeige auf Grundlage eines Punkts ausgeführt wird, an dem sich die Eingabevorrichtung zu einem Zeitpunkt befindet, an dem die Bewegungsrichtung der Eingabevorrichtung geändert wird, und
wobei ein Vergrößern oder Verkleinern der Bildschirmanzeige ein Vergrößern der Bildschirmanzeige aufweist, wenn die Eingabevorrichtung in einer ersten Richtung bewegt wird, die eine vertikale Richtung in Bezug auf die Bildschirmanzeige ist, und ein Verkleinern der Bildschirmanzeige, wenn die Eingabevorrichtung in einer zweiten Richtung bewegt wird, die eine horizontale Richtung in Bezug auf die Bildschirmanzeige ist.

2. Verfahren (100) nach Anspruch 1, ferner **gekennzeichnet durch** Wiederherstellen der vergrößerten oder verkleinerten Bildschirmanzeige auf eine ursprüngliche Bildschirmanzeige nach Erfassen einer voreingestellten Geste der Eingabevorrichtung.

3. Verfahren (100) nach Anspruch 1, ferner **gekennzeichnet durch** Ausgeben von Informationen, um einen Benutzer über das Umschalten auf den Bildschirm-Zoommodus zu informieren.

4. Verfahren (100) nach Anspruch 1, **dadurch gekennzeichnet, dass** die Eingabevorrichtung ein elektronischer Stift (200) mit einem Knopf (B) ist, das Signal durch den elektronischen Stift in Reaktion auf eine Betätigung des Knopfs übertragen wird, und die Bewegungsrichtung der Eingabevorrichtung eine Bewegungsrichtung einer Spitze des elektronischen Stifts entlang der Oberfläche der Bildschirmanzeige ist.

5. Elektronische Vorrichtung, aufweisend:
eine Sensorvorrichtung, die konfiguriert ist, um einen Berührungskontakt oder Beinahe-Berührungskontakt zu erfassen;
eine Anzeigeeinheit (830), die ein Bild auf einer Bildschirmanzeige anzeigt; und
ein Controller (810), der konfiguriert ist, um die Verfahrensschritte nach Anspruch 1 auszuführen.

6. Computerlesbares Speichermedium mit darauf gespeicherten, vom Computer ausführbaren Anweisungen, die bei Ausführung durch einen Computer den Computer veranlassen, eines der Verfahren nach Anspruch 1 bis 4 auszuführen.

## Revendications

1. Méthode (100) pour commander un dispositif électronique (10) comprenant un dispositif de détection configuré pour détecter un contact tactile ou un contact à effleurement, la méthode comprenant :
la réception d'un signal de champ magnétique d'un dispositif d'entrée (200) générant un signal de champ magnétique ;
la détermination (101) si une fréquence de signal de champ magnétique du signal de champ magnétique reçu est changée à une fréquence préréglée ;
la commutation (103) du dispositif électronique à un mode de zoom d'écran en réponse à la fréquence du signal de champ magnétique reçu, le signal étant changé à la fréquence préréglée ;
la détection (105) par le biais du dispositif de détection d'une direction de déplacement du dispositif d'entrée au cours du mode de zoom d'écran ;
le zoomage avant ou arrière (107) d'un écran du dispositif électronique en fonction de la direction de déplacement détectée du dispositif d'entrée ; et
la sortie du mode de zoom d'écran en réponse au changement de la fréquence du signal de champ magnétique du signal reçu sur une fréquence différente de la fréquence préréglée, le zoomage avant ou arrière de l'écran étant effectué à un facteur de zoom proportionnel à une distance de déplacement du dispositif d'entrée,
de sorte que si, au cours du mode de zoom d'écran, la direction de déplacement du dispositif d'entrée change d'au moins une valeur seuil préréglée, le zoomage d'écran est effectué en fonction d'un point où se trouve le dispositif d'entrée au moment où l'on change la direction de déplacement du dispositif d'entrée, et le zoomage avant ou arrière de l'écran comprend le zoomage avant dans l'écran en cas de déplacement du dispositif d'entrée dans une première direction, qui est une direction verticale relativement à l'écran, et le zoomage arrière de l'écran en cas de déplacement du dispositif d'entrée dans une deuxième direction, qui est une direction horizontale par rapport à l'écran.

2. Méthode (100) selon la revendication 1, **caractérisée en outre par** le rétablissement de l'écran zoomé en avant ou en arrière sur un écran initial lors de la détection d'un geste prédéterminé du dispositif d'entrée.

3. Méthode (100) selon la revendication 1, **caractérisée en outre par** la sortie d'informations pour communiquer à un utilisateur la commutation au mode de zoom d'écran.

4. Méthode (100) selon la revendication 1, **caractérisée en ce que** le dispositif d'entrée est un stylo électronique (200) muni d'un bouton (B), le signal étant transmis par le stylo électronique en réponse à une manipulation du bouton, et la direction de déplacement du dispositif d'entrée étant une direction de déplacement de la pointe du stylo électronique le long de la surface de l'écran.

5. Dispositif électronique comprenant :
un dispositif de détection configuré pour détecter un contact tactile ou un contact à effleurement,
un dispositif d'affichage (830) affichant une image sur l'écran ; et
un contrôleur (810) configuré pour exécuter les étapes de la méthode selon la revendication 1.

6. Support de stockage lisible par ordinateur, dans lequel sont mémorisées des instructions exécutables par ordinateur, qui, lors de leur exécution par un ordinateur, donnent lieu à l'exécution, par l'ordinateur, d'une quelconque des méthodes selon les revendications 1 à 4.
